(19)

**Europäisches Patentamt**
**European Patent Office**
**Office européen des brevets**

(11) **EP 1 956 512 A1**

(12) **EUROPÄISCHE PATENTANMELDUNG**

(43) Veröffentlichungstag:
**13.08.2008 Patentblatt 2008/33**

(51) Int Cl.:
*G06F 21/24* *(2006.01)*

(21) Anmeldenummer: 07102119.0

(22) Anmeldetag: **12.02.2007**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK RS**

(71) Anmelder: **PD-Gaus Programmier- und Datenservice GmbH**
**64372 Ober-Ramstadt (DE)**

(72) Erfinder:
• **Der Erfinder hat auf seine Nennung verzichtet.**

(74) Vertreter: **Betten & Resch**
**Patentanwälte**
**Theatinerstrasse 8**
**80333 München (DE)**

(54) **Verfahren zur kryptographischen Datenverschlüsselung**

(57)      Die Erfindung schlägt ein Verfahren zur kryptographischen Datenverschlüsselung vor, wobei aus einer Vielzahl personenbezogener Datensätze eine Vielzahl jeweils eindeutig zugeordneter, anonymisierter Datensätze erzeugt wird, welches die Schritte des Erzeugens einer Zufallsreihenfolge der Vielzahl personenbzogener Datensätze und der Einwegcodierung jedes der personenbezogenen Datensätze umfasst. Durch das erfindungsgemäße Verfahren können Daten mit sehr hoher Datensicherheit anonymisiert übermittelt werden. Die Erfindung basiert somit darauf, zunächst die Datensätze in eine zufällige Reihenfolge zu bringen (Randomisierung) und anschließend eine Einwegcodierung durchzuführen, die eine Rückgewinnung der Ursprungsdaten mit realistischem technischen Aufwand unmöglich macht. Andererseits wird zu jedem Datensatz bei mehrmaliger Anwendung des Verfahrens immer der gleiche anonymisierte Datensatz erzeugt, so dass eine Verfolgung der Verschreibungsdaten auf der Ebene einzelner Patienten (Patienten-Tracking) möglich ist, das zur Validierung der Wirkung von Wirkstoffen und Behandlungsmethoden besonders wertvoll ist.

N personenbezogene Datensätze
↓
| Erzeugung einer Zufallsreihenfolge der N Datensätze | S2 |
↓
| Verändern jedes der N Datensätze | S4 |
↓
| Abspeichern jedes der N Datensätze | S6 |
↓
| Prüfung, ob Datenwert schon einmal erzeugt wurde | S8 |
↓
| Einwegverschlüsselung jedes der N Datensätze | S10 |
↓
N anonymisierte Datensätze

Fig. 2

EP 1 956 512 A1

**Beschreibung**

Die Erfindung betrifft ein Verfahren zur kryptographischen Datenverschlüsselung.

Verwandter Stand der Technik

Bei der Verarbeitung und/oder Auswertung von personenbezogenen Daten, beispielsweise von Verschreibungsdaten im Apothekenbereich, muss ein ausreichender Datenschutz gewährleistet sein. Durch gesetzliche Vorschriften wie insbesondere das Datenschutzgesetz sind zwingende Regelungen getroffen, deren Einhaltung durch technische und organisatorische Maßnahmen sichergestellt werden muß.

Dies gilt insbesondere für sensible Daten wie etwa Verschreibungsdaten im Gesundheitswesen. Die aus wirtschaftlichen und medizinischen Gründen wünschenswerte statistische Auswertung von personenbezogenen medizinischen Daten etwa zur Überprüfung der Wirksamkeit pharmazeutischer Präparate oder medizinischer Behandlungsmethoden ist nur möglich, wenn eine Anonymität der Daten unter allen Umständen sichergestellt ist. Entsprechende Auswertungsverfahren müssen daher durch die Datenschutzbehörden genehmigt werden.

Die insbesondere in letzter Zeit stark wachsende Anzahl von Datenübermittlungen über das Internet sowie die zunehmende Anzahl von drahtlosen Übertragungen stellen hierbei zudem ein Problem dar.

Bekannt sind kryptographische Verschlüsselungsverfahren, die immer wieder verbessert worden sind. Diese basieren in der Regel auf einer mathematischen Einwegverschlüsselung. Hierbei wird eine sogenannte Einwegfunktion angewendet, so dass ein Ergebnis nicht umkehrbar ist.

Derartige Verfahren werden üblicherweise zur Verschlüsselung, Signierung oder Authentifizierung von Daten genutzt.

Bekannt sind asymmetrische Krypto-Verfahren, bei denen ein Schlüssel zum Entschlüsseln nicht mit einem Verschlüsselungsschlüssel übereinstimmt. Der sogenannte private Schlüssel zum Entschlüsseln wird zufällig generiert. Der sogenannte öffentliche Schlüssel, der zum Verschlüsseln dient, wird über eine zumeist nur schwer umkehrbare Funktion aus dem privaten Schlüssel erzeugt.

Eine Kommunikationsverbindung kann so ohne erheblichen Verschlüsselungsaufwand realisiert werden. Für eine Datenanonymisierung beim Datenaustausch von Medikamentierungsdaten, die sehr strengen Auflagen unterliegt, genügen diese Verfahren, wie es in der Praxis angewendet wird, jedoch nicht.

Bekannt sind Verfahren, die als mathematische Grundlage die Exponentialfunktion nutzen. Diese Funktion ist eine schwer umkehrbare Funktion und bietet eine Einwegverschlüsselung. Die Exponentialfunktion ist zwar durch eine Logarithmierung schwer umkehrbar, doch eine Umkehrung ist dem Grunde nach möglich und benötigt lediglich eine lange Rechenzeit. Da Rechner stets an Rechengeschwindigkeit zunehmen, stellt dies ein Problem dar.

Ein bekanntes Verfahren zur Kryptographie ist das sogenannte El Gamal-Verfahren, Dieses Verfahren ist für die gewünschte Anwendung nicht geeignet, weil die sogenannte Performance und die Länge der für eine sichere Verschlüsselung benötigten Zahlen bei Medikamentierungsdaten nicht gegeben ist. So liefern eine Versichertennummer oder eine Kassennummer eines Patienten nur einen 128-BitWert. In der Praxis sind jedoch mindestens 1024 Bit für eine sichere Verschlüsselung erforderlich.

Es sind auch Kryptoverfahren auf Basis elliptischer Kurven bekannt. Eine elliptische Kurve bei diesen Verfahren ist im Grunde eine Gleichung der Form

$$y^2 = x^3 + ax + b.$$

Das Kryptoverfahren auf Basis elliptischer Kurven hat beispielsweise den Vorteil, dass eine geringere Schlüssellänge erforderlich ist. Es werden aber mindestens noch 160 Bit benötigt. In der Praxis wird dieses Verfahren bei ressourcenschwachen Geräten, wie Mobilfunkgeräten, genutzt. Im vorliegenden Fall reicht selbst dieses hochentwickelte Verfahren nicht aus.

Es sind auch Verfahren auf Basis einer kryptographischen Hash-Funktion bekannt. Sie erfordern aber eine höhere Bit-Zahl als bei Verfahren auf Basis elliptischer Kurven, um eine geeignete Sicherheit zu gewährleisten.

Der Erfindung liegt die **Aufgabe** zugrunde, ein Verfahren zur kryptographischen Datenverschlüsselung bereitzustellen, welches aus einer Vielzahl personenbezogener Datensätze jeweils eindeutig zugeordnete, anonymisierte Datensätze erzeugt, so dass eine Wiedergewinnung der personenbezogenen Daten aus den anonymisierten Daten wenigstens wesentlich erschwert, wenn nicht unmöglich gemacht wird.

Diese Aufgabe wird durch ein Verfahren nach Anspruch 1 gelöst, welches die Schritte des Erzeugens einer Zufallsreihenfolge der Vielzahl personenbzogener Datensätze, und der Einwegcodierung jedes der personenbezogenen Datensätze umfasst.

Durch das erfindungsgemäße Verfahren können Daten mit sehr hoher Datensicherheit anonymisiert übermittelt werden, und zwar unter Zuhilfenahme von Verfahren, die ansonsten nur für hohe Bit-Werte geeignet sind. Die Erfindung beruht auf dem Gedanken, dass in einem ersten Schritt eine Zufallsreihenfolge der Vielzahl der Datensätze beispielsweise nach einem Auswahlverschlüsselungsalgorithmus ausgewählt wird. Diese Vorgehensweise dient dazu sicherzustellen, dass die Reihenfolge der entnommenen Daten nicht mit der Reihenfolge der verschlüsselten Daten übereinstimmt. Die Reihenfolge der Eingangsdaten ist nicht gleich der Reihenfolge der Ausgangsdaten. Hierdurch wird ausgeschlossen, dass man aufgrund der Reihenfolge der Daten irgendwelche Rückschlüsse auf den Inhalt der personenbezogenen Daten ziehen kann.

Erfindungsgemäß ist vorgesehen, dass der Auswahlverschlüsselungsalgorithmus auf einer zufälligen Auswahlfolge basiert. Durch den Zufallseffekt beim Auswählen eines Eingangsdatensatzes in Kombination mit einer mathematischen Einwegfunktion wird höchste Sicherheit ohne das Erfordernis anderer Verfahren, wie Kryptographie auf Basis elliptischer Kurven, erreicht.

Die aus der Liste extrahierten Daten werden anschließend durch eine Einwegcodierung codiert. Aufgrund der Einwegcodierung ist ausgeschlossen, dass aus dem Ergebnis des Verschlüsselungsprozesses die Ausgangsbasis der Verschlüsselung ermittelt werden kann.

Die Erfindung basiert somit darauf, zunächst die Datensätze in eine zufällige Reihenfolge zu bringen (Randomisierung) und anschließend eine Einwegcodierung durchzuführen, die eine Rückgewinnung der Ursprungsdaten mit realistischem technischen Aufwand unmöglich macht. Andererseits wird zu jedem Datensatz bei mehrmaliger Anwendung des Verfahrens immer der gleiche anonymisierte Datensatz erzeugt, so dass eine Verfolgung der Verschreibungsdaten auf der Ebene einzelner Patienten (Patienten-Tracking) möglich ist, das zur Validierung der Wirkung von Wirkstoffen und Behandlungsmethoden besonders wertvoll ist.

In einer vorteilhaften Weiterbildung des erfindungsgemäßen Verfahrens ist vorgesehen, dass die Einwegcodierung das Verändern jedes der personenbezogenen Datensätze und die Einwegverschlüsselung jedes der personenbezogenen Datensätze umfasst. Insbesondere erfolgt die Veränderung durch Einfügen eines bestimmten Zeichens an einer bestimmten Position. Dadurch wird eine maximale Sicherheit bei der Verschlüsselung sowie eine vollständiger Ausschluß der Rückführbarkeit der Ausgangsbasis der Verschlüsselung der Daten geschaffen. So kann zum Beispiel bei einem Datensatz "54321" vor der Verschlüsselung eine weitere "geheime" (d.h. für den Verarbeiter und Auswerter der Daten unbekannte) Ziffer an einer vorzugsweise "geheimen" Stelle in des Datensatzes eingefügt werden. So kann eine Geheimzahl "1" an einer geheimen Dezimalstelle eingefügt werden. Aus der "54321" wird hiernach z.B. die Ziffer zu "543211" verändert.

Hierdurch ist eine Rückführbarkeit ausgeschlossen und gesetzliche Anforderungen werden sogar "übererfüllt".

Vorteilhaft ist es, wenn ein Verschlüsselungsprozess oberhalb einer bestimmten Anzahl von Datensätzen, insbesondere oberhalb von 1 Million Datensätzen in Gang gesetzt wird. Dadurch wird eine zusätzliche Sicherheit geschaffen. Hierbei ist sichergestellt, dass der Auswahlalgorithmus nicht "geknackt" wird.

Zweckmäßigerweise eignet sich als Einwegverschlüsselung eine kryptographische Hash-Funktion, beispielsweise mittels eines MD5-Algorithmus mit 128-Bit Hashwert. Diese ist leicht zu programmieren, da sie für viele Anwendungsfälle standardmäßig eingesetzt wird. Durch die Erfindung können weniger als 1024 Bit verwendet werden, die bei kryptographischen Hash-Funktionen ansonsten erforderlich sind.

Vorzugsweise weist das erfindungsgemäße Verfahren den weiteren Schritt der Überprüfung auf, ob derselbe Wert des veränderten personenbezogenen Datensatzes ein zweites Mal erzeugt wurde. Dadurch wird die oben erwähnte vorteilhafte Eindeutigkeit der erzeugten anonymisierten Datensätze sichergestellt.

Jeder der personenbezogenen Datensätze kann beispielsweise aus ersten und zweiten Daten bestehen, wobei die ersten Daten eine bestimmte Person und die zweiten Daten eine Versicherung, beispielsweise Krankenversicherung, angeben können.

Die personenbezogenen Daten können beispielsweise von einem Apothekenrechenzentrum erfasst werden.

Die Erfindung umfasst außerdem ein Computerprogramm mit Programmcode, das, wenn es auf einem Computer abläuft, das erfindungsgemäße Verfahren ausführt, sowie einen Datenträger mit dem gespeicherten Computerprogramm.

Weitere vorteilhafte Ausgestaltungen der Erfindung sind in den weiteren Neben- und Unteransprüchen gekennzeichnet.

Ein Ausführungsbeispiel der Erfindung wird im Folgenden anhand der Zeichnungen näher erläutert, wobei weitere vorteilhafte Weiterbildungen der Erfindung und Vorteile derselben beschrieben sind.

Es zeigen:

Fig. 1    eine schematische Darstellung eines Beispiels eines Datensatzes personenbezogener Daten,

Fig. 2    ein Flußdiagramm mit den wesentlichen Verfahrensschritten eines Ausführungsbeispiels des erfindungsgemäßen Verfahrens,

Fig. 3    eine schematische Darstellung eines ersten Verschlüsselungsschrittes eines Ausführungsbeispiels des erfindungsgemäßen Verfahrens

Fig, 4    eine schematische Darstellung weiterer Verschlüsselungsschritte eines Ausführungsbeispiels des erfindungsgemäßen Verfahrens, und

Fig.5    ein Beispiel eines Datensatzes von Medikamentierungsdaten im Apothekenbereich.

Die Erfindung wird nun anhand eines Ausführungsbeispiels unter Bezugnahme auf die Zeichnungen im Detail beschrieben.

Das Rezept eines Patienten zur Abholung in einer Apotheke, mit dem ein Medikament verordnet ist, enthält außer dem Namen des Patienten eine Patienten- bzw. eine Versicherungsnummer sowie eine Kassennummer der jeweiligen Krankenkasse bzw. Krankenversicherung.

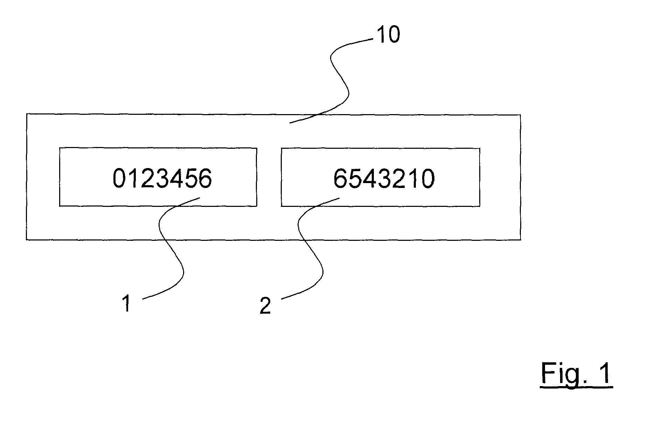

Fig. 1 zeigt eine schematische Darstellung einer Datensatzkombination 10 bestehend aus ersten Daten 1 z.B. "0123456" eines ersten Datensatzes, die beispielsweise den Versichertennummern-Daten des Patienten entsprechen, und zweiten Daten 2 ("6543210"), die beispielsweise der Kassennummer des Patienten entspricht. Selbstverständlich ist die Erfindung nicht auf ein bestimmtes Format der personenbezogenen Daten eingeschränkt, sondern ist auf alle möglichen unterschiedlichen Datenformate anwendbar.

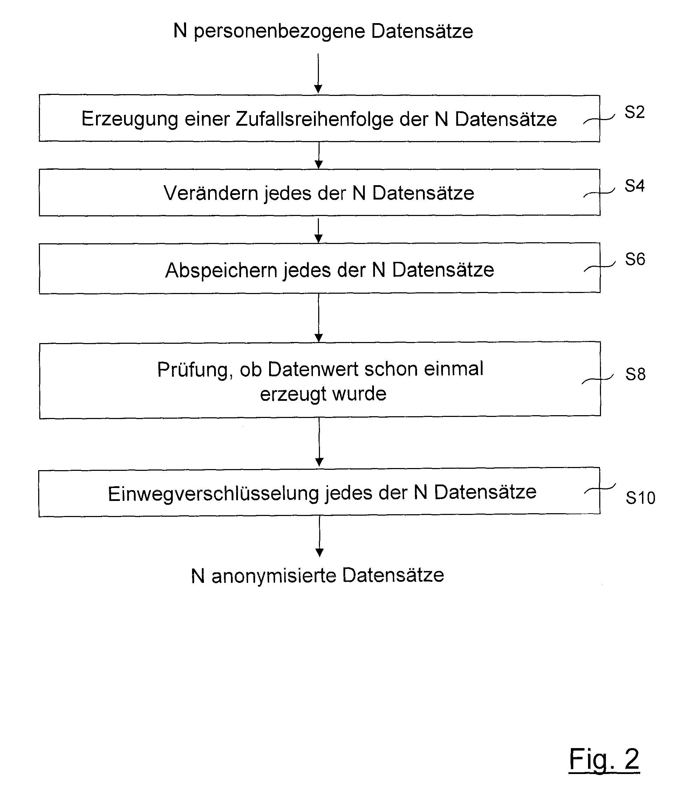

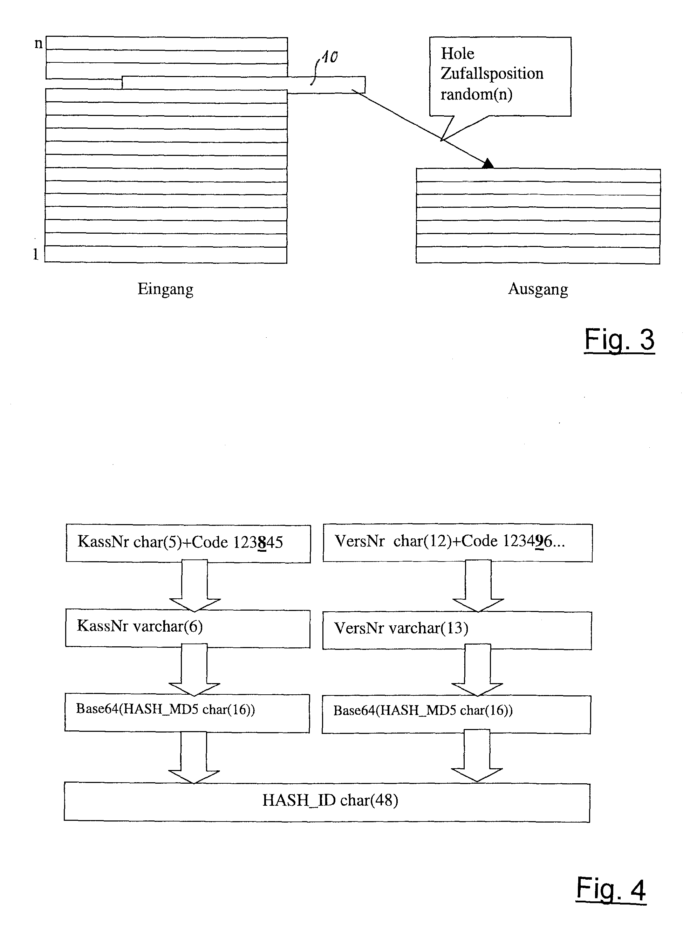

Ein Ausführungsbeispiel des erfindungsgemäßen Verfahrens ist im Flußdiagramm von Figur 2 schematisch dargestellt. In einem ersten Verfahrensschritt S2 wird die eingegebene Menge N personenbezogener Datensätze in eine zufällige Reihenfolge gebracht, beispielsweise durch den in Figur 3 beschriebenen Auswahlalgorithmus. Dann wird in Schritt S4 jeder der Datensätze verändert, etwa durch Hinzufügung eines bestimmten Zeichens an einer bestimmten Position des Datensatzes. Der so veränderte Datensatz wird in Schritt S6 abgespeichert und es wird anschließend in Verfahrensschritt S8 überprüft, ob derselbe Datensatz schon einmal erzeugt wurde, um die Eindeutigkeit sicherzustellen. In Schritt S10 wird schließlich die Einwegverschlüsselung mit einer Hash-Funktion oder einem anderen geeigneten Algorithmus ausgeführt.

Details des Ausführungsbeispiels des erfindungsgemäßen Verfahrens sind in den Figuren 3 und 4 veranschaulicht.

Die Datensätze 10, d.h. beispielsweise die Versicherten- und Kassennummer, werden in einer Liste bzw. einem Datenstapel gespeichert.

Erfindungsgemäß wird eine Datensatzkombination nach einem für den Anwender der Daten "geheimen" Auswahlverschlüsselungsalgorithmus ausgewählt. Vorzugsweise geschieht dies über eine Zufallsfunktion random(n), so dass die Reihenfolge der aus dem in Fig. 3 gezeigten linken Eingangsstapel bzw. der Liste nicht aus der Reihenfolge des rechten Ausgangsstapels ermittelt werden kann.

Vorzugsweise erfolgt der erläuterte Verschlüsselungsprozess oberhalb einer bestimmten Anzahl von Datensätzen. Zweckmäßig ist es, wenn mindestens 1 Million Datensätze vorhanden sind, bevor der erste Verschlüsselungsprozess erfolgt. Durch 1 Million Datensätze oder mehr ist jede mathematische Rückführbarkeit mit der zur Verfügung stehenden Rechenkapazität von Rechnern ausgeschlossen.

Figur 4 zeigt die Verfahrensschritte S4 und S10 aus Figur 2.

Die in eine Zufallsreihenfolge gebrachten Daten werden zunächst durch Einfügen eines bestimmten Zeichens an einer bestimmten Position des Datensatzes verändert, im dargestellten Beispiel die Kassennummer zwischen der dritten und vierten Ziffer durch Einfügen einer "8" und die Versichertennummer durch Einfügen einer "9" zwischen der vierten und fünften Ziffer. Die Art der Datenveränderung ist dem Verarbeiter der anonymisierten Daten nicht bekannt, um so Möglichkeiten einer Zurückverfolgung auszuschließen. Die gesamte Datenanonymisierung wird so als "black box"-Vorgang ausgeführt.

Die veränderten Daten werden dann durch eine geeignete Verschlüsselungssoftware, beispielsweise mittels einer MD5- Einwegverschlüsselung (Message Digest Algorithm 5) verschlüsselt. Hierbei handelt es sich um eine kryptographische Hash-Funktion, die einen 128-Bit-Hashwert erzeugt. Der Hash-Wert wird beispielsweise als 32-stellige Hexadezimalzahl notiert. Durch die Einwegverschlüsselung wird eine neue Zeichenkette "HASH_ID char (48)" erzeugt. Als Beispiel kann aus der Versichertennummer "1234567" und der Kassennummer "54321" die Hexadezimalzahl "34048ce4cd069b-624f6e021ba63ecde5" gebildet werden. Durch die angewendete Einwegverschlüsselung ist aus dem Ergebnis des Verschlüsselungsprozesses "34048ce4cd069b-624f6e021 ba63ecde5" die Ausgangsbasis der Verschlüsselung nicht ermittelbar.

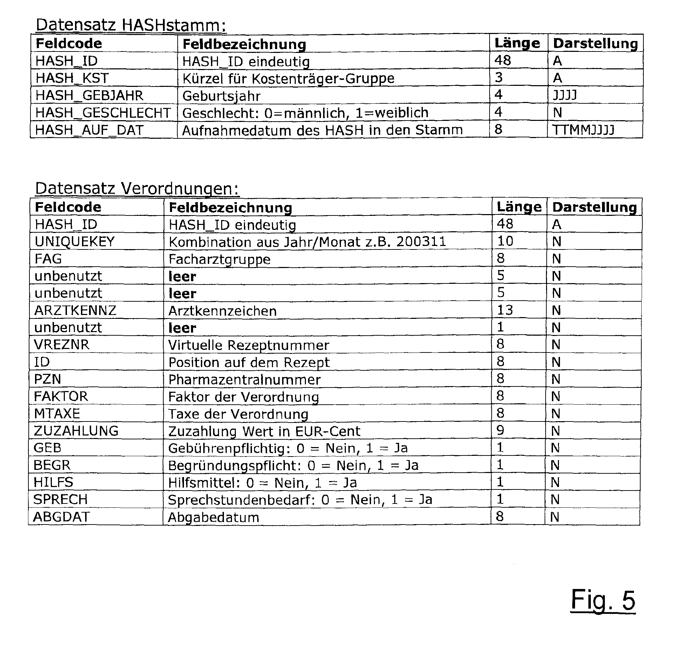

Fig. 5 zeigt eine Datenaustauschdokumentation bei Medikamentierungsdaten im Apothekenbereich mit verschiedenen Datensätzen. In der oberen Tabelle sind Stammdaten einer HASH_ID mit einer 48-stelligen Hexadezimalzahl enthalten, worunter zum Beispiel ein Kürzel für eine Kostenträgergruppe wiederum enthalten ist.

In der unteren Tabelle der Fig. 5 sind die einzelnen Verordnungen angegeben. Die HASH_ID, die ebenfalls eine Länge von 48 Zeichen beinhaltet, kann beispielsweise als Dateninformation für eine Facharztgruppe (8 Zeichen), eine Taxe der Verordnung (8 Zeichen) oder ein Ausgabedatum (8 Zeichen) vorhanden sein. Auch andere Zeichenlängen sind möglich, zum Beispiel Sprechstundenbedarf (1 Zeichen) oder Arztkennzeichen (13 Zeichen).

Bei der gezeigten Tabelle gemäß Fig. 5 wird ebenfalls aus der Versicherten- und Kassennummer mit einem Hashcode-Algorithmus, vorzugsweise einem MD5-Algorithmus, eine Zeichenkette erzeugt. Die Feldlänge beträgt vorzugsweise 48 Zeichen, wobei dies zum Export im sogenannten CSV-Format konvertiert wird.

Das in Fig. 5 gezeigte Feld "VREZNR" (virtuelle Rezeptnummer) kann vom Dateneingang entkoppelt werden. Um dieses Feld komplett vom Dateneingang zu entkoppeln, wird bei der Ausgabe ein Verordnungsstapel gebildet. Aus diesem Stapel wird ein beliebiges Rezept herangezogen. Hierbei wird dem Feld "VREZNR" ein fortlaufende Ausgabevariable zugewiesen. Die Rezepte werden hiermit gemischt und die Rezeptnummer "VREZNR" der Rezepte enthält eine Ausgabereihenfolge. Vorzugsweise werden nach Verschlüsselung und Versand die Ausgabedateien gelöscht.

Zusammenschauend betrachtet, zeigt das Beispiel, dass die Ergebnisse des Verschlüsselungsprozesses, z.B. die 32-stelligen Hexadezimalzahlen (z.B. "34048ce4cd069b624f6e021 ba63ecde5"), in eine Ausgabedatei überführt werden, wobei es für die Verarbeiter der anonymisierten Datensätze unmöglich ist, aufgrund der erstellten Hexadezimalzahlen zu ermitteln, welche Patienten- und Kassennummer bzw., welche natürliche Person sich dahinter verbirgt

Da der Abnehmer nur die 32-stelligen Hexadezimalzahlen als Teil der Ausgabedatei erhält, ist für den Abnehmer des Datensatzes jeder Personenbezug ausgeschlossen, die Eindeutigkeit der anonymisierten Datensätze bleibt jedoch erhalten, so dass demselben Patienten bei wiederholter Verschlüsselung immer der gleiche verschlüsselte Datensatz zugeordnet wird und ein "Tracking" durchgeführt werden kann.

Die Erfindung ist nicht auf das beschriebene Beispiel beschränkt. So kann anstatt der Hash-Funktion ein anderes Kryptoverfahren, wie Kryptoverfahren auf Basis elliptischer Kurven eingesetzt werden, andere zusätzliche Verschlüsselungsmaßnahmen, wie Vertauschen von Reihenfolgen, können genutzt werden. Auch muß nicht zuerst der Auswahlalgorithmus vor der Einwegverschlüsselung erfolgen. Auch eine umgekehrte Anwendung ist denkbar.

**Patentansprüche**

1. Verfahren zur kryptographischen Datenverschlüsselung, wobei aus einer Vielzahl personenbezogener Datensätze eine Vielzahl jeweils eindeutig zugeordneter, anonymisierter Datensätze erzeugt wird, aufweisend die Schritte:

    a) Erzeugen einer Zufallsreihenfolge der Vielzahl personenbzogener Datensätze, und
    b) Einwegcodierung jedes der personenbezogenen Datensätze.

2. Verfahren nach Anspruch 1, wobei der Schritt der Einwegcodierung umfasst:

    b1) Verändern jedes der personenbezogenen Datensätze, und
    b2) Einwegverschlüsselung jedes der personenbezogenen Datensätze.

3. Verfahren nach Anspruch 2, wobei die Einwegverschlüsselung mittels einer kryptographischen Hash-Funktion erfolgt.

4. Verfahren nach Anspruch 3, wobei die Einwegverschlüsselung mittels eines MD5-Algorithmus mit 128-Bit Hashwert erfolgt.

5. Verfahren nach einem der Ansprüche 2 bis 4, wobei das Verändern jedes der personenbezogenen Datensätze durch Einfügen eines Zeichens in den personenbezogenen Datensatz erfolgt.

6. Verfahren nach Anspruch 5, wobei das Verändern jedes der personenbezogenen Datensätze durch Einfügen eines bestimmten Zeichens an einer bestimmten Position in den personenbezogenen Datensatz erfolgt.

7. Verfahren nach einem der Ansprüche 1 bis 6, aufweisend den zusätzlichen Schritt der Prüfung, ob derselbe Wert eines veränderten personenbezogenen Datensatzes ein zweites Mal erzeugt wurde.

8. Verfahren nach einem der vorhergehenden Ansprüche, wobei jeder der personenbezogenen Datensätze aus ersten und zweiten Daten besteht.

9. Verfahren nach Anspruch 8, wobei die ersten Daten eine bestimmte Person und die zweiten Daten eine Versicherung, beispielsweise Krankenversicherung, angeben.

10. Verfahren nach einem der vorhergehenden Ansprüche, wobei wenigstens eine Million personenbezogener Daten verschlüsselt werden.

11. Verfahren nach einem der vorhergehenden Ansprüche, wobei die personenbezogenen Daten von einem Apothekenrechenzentrum erfasst werden.

12. Verwendung des Verfahrens nach einem der vorhergehenden Ansprüche zur statistischen Erfassung der Verschreibung von Medikamenten.

13. Verwendung nach Anspruch 12, wobei die Verschreibung von Medikamenten für einzelne Patienten anhand der anonymisierten Datensätze über einen längeren Zeitraum verfolgt wird (Patienten-Tracking).

14. Verwendung nach Anspruch 12 oder 13, wobei der Datenverschlüsselungsalgorithmus dem Auswerter und Verarbeiter der anonymisierten personenbezogenen Daten nicht bekannt ist.

15. Computerprogramm mit Programmcode, das, wenn es auf einem Computer abläuft, ein Verfahren nach einem der Ansprüche 1 bis 11 ausführt.

16. Datenträger, auf dem ein Computerprogramm nach Anspruch 15 gespeichert ist.

Fig. 1

N personenbezogene Datensätze

| Erzeugung einer Zufallsreihenfolge der N Datensätze | S2 |

| Verändern jedes der N Datensätze | S4 |

| Abspeichern jedes der N Datensätze | S6 |

| Prüfung, ob Datenwert schon einmal erzeugt wurde | S8 |

| Einwegverschlüsselung jedes der N Datensätze | S10 |

N anonymisierte Datensätze

## Fig. 2

Hole
Zufallsposition
random(n)

n

1

Eingang

Ausgang

**Fig. 3**

| KassNr char(5)+Code 123**8**45 | VersNr  char(12)+Code 1234**9**6... |

| KassNr varchar(6) | VersNr varchar(13) |

| Base64(HASH_MD5 char(16)) | Base64(HASH_MD5 char(16)) |

| HASH_ID char(48) |

**Fig. 4**

8

Datensatz HASHstamm:

| Feldcode | Feldbezeichnung | Länge | Darstellung |
|---|---|---|---|
| HASH_ID | HASH_ID eindeutig | 48 | A |
| HASH_KST | Kürzel für Kostenträger-Gruppe | 3 | A |
| HASH_GEBJAHR | Geburtsjahr | 4 | JJJJ |
| HASH_GESCHLECHT | Geschlecht: 0=männlich, 1=weiblich | 4 | N |
| HASH_AUF_DAT | Aufnahmedatum des HASH in den Stamm | 8 | TTMMJJJJ |

Datensatz Verordnungen:

| Feldcode | Feldbezeichnung | Länge | Darstellung |
|---|---|---|---|
| HASH_ID | HASH_ID eindeutig | 48 | A |
| UNIQUEKEY | Kombination aus Jahr/Monat z.B. 200311 | 10 | N |
| FAG | Facharztgruppe | 8 | N |
| unbenutzt | **leer** | 5 | N |
| unbenutzt | **leer** | 5 | N |
| ARZTKENNZ | Arztkennzeichen | 13 | N |
| unbenutzt | **leer** | 1 | N |
| VREZNR | Virtuelle Rezeptnummer | 8 | N |
| ID | Position auf dem Rezept | 8 | N |
| PZN | Pharmazentralnummer | 8 | N |
| FAKTOR | Faktor der Verordnung | 8 | N |
| MTAXE | Taxe der Verordnung | 8 | N |
| ZUZAHLUNG | Zuzahlung Wert in EUR-Cent | 9 | N |
| GEB | Gebührenpflichtig: 0 = Nein, 1 = Ja | 1 | N |
| BEGR | Begründungspflicht: 0 = Nein, 1 = Ja | 1 | N |
| HILFS | Hilfsmittel: 0 = Nein, 1 = Ja | 1 | N |
| SPRECH | Sprechstundenbedarf: 0 = Nein, 1 = Ja | 1 | N |
| ABGDAT | Abgabedatum | 8 | N |

## Fig. 5

**Europäisches Patentamt**

# EUROPÄISCHER RECHERCHENBERICHT

Nummer der Anmeldung

EP 07 10 2119

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2002/073138 A1 (GILBERT ERIC S [US] ET AL) 13. Juni 2002 (2002-06-13) <br> * Zusammenfassung * <br> ----- | 1-16 | INV. <br> G06F21/24 |
| X | US 2005/044059 A1 (SAMAR VIPIN [US]) 24. Februar 2005 (2005-02-24) <br> * Zusammenfassung * <br> ----- | 1-16 | |
| X | US 2002/169793 A1 (SWEENEY LATANYA [US]) 14. November 2002 (2002-11-14) <br> * Absatz [0002] - Absatz [0005] * <br> * Absatz [0030] - Absatz [0031] * <br> * Absatz [0041] - Absatz [0042] * <br> ----- | 1-16 | |
| X | US 2005/283621 A1 (SATO YOSHINORI [JP] ET AL) 22. Dezember 2005 (2005-12-22) <br> * Absatz [0010] - Absatz [0014] * <br> ----- | 1-16 | |
| A | SCHNEIER B: "COMMUNICATIONS USING PUBLIC-KEY CRYPTOGRAPHY" APPLIED CRYPTOGRAPHY. PROTOCOLS, ALGORITHMS, AND SOURCE CODE IN C, NEW YORK, JOHN WILEY & SONS, US, 1996, Seiten 31-34,52, XP000864215 ISBN: 0-471-11709-9 <br> * Seite 52 - Seite 53 * <br> ----- | | RECHERCHIERTE SACHGEBIETE (IPC) <br><br> G06F |

Der vorliegende Recherchenbericht wurde für alle Patentansprüche erstellt

| Recherchenort | Abschlußdatum der Recherche | Prüfer |
|---|---|---|
| München | 28. Juni 2007 | Mezödi, Stephan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 07 10 2119

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-06-2007

| Im Recherchenbericht angeführtes Patentdokument | Datum der Veröffentlichung | Mitglied(er) der Patentfamilie | Datum der Veröffentlichung |
|---|---|---|---|
| US 2002073138 A1 | 13-06-2002 | US 2006020611 A1 | 26-01-2006 |
| US 2005044059 A1 | 24-02-2005 | WO 2005022414 A2 | 10-03-2005 |
| US 2002169793 A1 | 14-11-2002 | KEINE | |
| US 2005283621 A1 | 22-12-2005 | CN 1670746 A | 21-09-2005 |

EPO FORM P0461

Für nähere Einzelheiten zu diesem Anhang : siehe Amtsblatt des Europäischen Patentamts, Nr.12/82